## Europäisches Patentamt

## European Patent Office

## Office européen des brevets

(19)

(11) Veröffentlichungsnummer: **0 159 976**
A2

(12)

# EUROPÄISCHE PATENTANMELDUNG

(21) Anmeldenummer: **85890096.2**

(22) Anmeldetag: **18.04.85**

(51) Int. Cl.⁴: **E 04 B 1/348**, A 47 K 4/00

---

(30) Priorität: **25.04.84 AT 1368/84**

(43) Veröffentlichungstag der Anmeldung: **30.10.85**
**Patentblatt 85/44**

(84) Benannte Vertragsstaaten: **BE DE FR GB IT NL**

(71) Anmelder: **VEREINIGTE EDELSTAHLWERKE AKTIENGESELLSCHAFT (VEW), Elisabethstrasse 12, A-1010 Wien (AT)**

(72) Erfinder: **Siiberberger, Josef, Hauptstrasse 228, A-2391 Kaltenleutgeben (AT)**

(74) Vertreter: **Widtmann, Georg, Dr., Vereinigte Edelstahlwerke Aktiengesellschaft (VEW) Elisabethstrasse 12, A-1010 Wien (AT)**

---

(54) Transporteinheit.

(57) Die Erfindung betrifft eine Transporteinheit zum Aufbau von Nutz- bzw. Wohnräumen mit Wasserinstallationen und gegebenenfalls weiteren Einrichtungen, gegebenenfalls mit mehreren Raumeinheiten in Form eines Quaders mit Kantenelementen und zumindest zwei Grundrahmen (1, 2), die über insbesondere vier Steher (3, 4, 5, 6) verbunden sind; welcher Quader gegebenenfalls Streben aufweist, und einer Bodenplatte (12), die im wesentlichen parallel zum Grundrahmen (1) angeordnet ist, für den Wohn- bzw. Nutzraum, wobei die Bodenplatte (12) zumindest Ausnehmungen für den Durchtritt einer Wasserabflussleitung (11) aufweist, die im Bereich der Bodenplatte (12) mit einem Rohrkupplungselement (13) endigt, wobei zumindest ein weiterer Quader (10) mit kürzeren Stehern (9) als denjenigen des Quaders der Raumeinheit vorgesehen ist, welcher zumindest eine Wasserabflussleitung (11) mit einem Kupplungselement (13) im Bereich des Grundrahmens (1) aufweist.

EP 0 159 976 A2

## Transporteinheit

Die Erfindung bezieht sich auf eine Transporteinheit zum Aufbau von Wohn- bzw. Nutzräumen mit Wasserinstallationen.

Für den Transport von Gütern größerer und kleinerer Abmessungen werden seit einiger Zeit genormte Behälter verwendet, die im allgemeinen als Container bezeichnet werden. Die Normung dieser Transportbehälter hat den Vorteil, daß sowohl beim Wasser-, Land-als auch Lufttransport eine optimale Ausnutzung des Transportvolumens gegeben ist, da das Volumen der Transportfahrzeuge an jenes der Container angepaßt ist. Ein weiterer Vorteil des Containertransportes liegt darin, daß die Behälter mehrfach verwendet werden können und eine Beschädigung des zu transportierenden Gutes besonders günstig vermieden werden kann.

Die Container weisen an ihren Eckpunkten in der Regel Gußstücke auf, in welchen Haken , z.B. von Kränen u. dgl., einbringbar sind, wodurch eine leichte und rasche Verbringbarkeit  der Behälter gegeben ist. Weiters können die Behälter auch über diese Eckstücke miteinander verbunden werden. Bei Baustellen und Katastrophengebieten wurden derartige Container mit entsprechenden Einrichtungen, z.B. Büromöbel, Sanitäranlagen u. dgl., an Ort und Stelle versehen. Weiters wurden bereits derartige Container übereinander angeordnet, womit mehrstöckige Gebäude erhalten werden können. Ausgesprochen nachteilig ist jedoch, daß zuerst die Container an Ort und Stelle errichtet werden müssen, z.B. der Container wird mit Distanzstücken, Füßen, od. dgl. auf der Aufstellfläche abgestützt, wonach die erforderlichen Installationen, insbesondere Wasserzu- und -abflüsse in den Containern errichtet werden, wonach die Einrichtung angeordnet werden, und ein Anschluß mit den örtlichen Ver- und Entsorgungsleitungen erfolgt. Container dieser Bauart ermöglichen jedoch keinen raschen Einsatz oder die Einrichtungen bedingen ein sehr hohes Transportvolumen was ebenfalls nachteilig ist.

Man hat bereits eigene Container in Vorschlag gebracht, die lediglich ein Teilvolumen eines Normcontainers beanspruchen und welche an Ort und Stelle unter- bzw. oberhalb eines Normcontainers angeordnet werden, durch welche an Ort und Stelle die Ver- und Entsorgungsleitungen geführt werden.

Die vorliegende Erfindung hat sich zum Ziel gesetzt, eine Transporteinheit zum Aufbau von Nutz- bzw. Wohnräumen, gegebenenfalls mit mehreren Raumeinheiten zu schaffen, die eine besonders rasche Aufstellung erlaubt, wobei eine Beschädigung der Ver- und Entsorgungsleitungen, insbesondere der Abflußleitung sicher vermieden ist, und ein möglichst geringes Transportvolumen bedürfen, wobei gleichzeitig ein durchgehender Boden mit anderen Einheiten ermöglicht werden soll.

Die erfindungsgemäße Transporteinheit zum Aufbau von Nutz- bzw. Wohnräumen mit Wasserinstallationen und gegebenenfalls weiteren Einrichtungen, gegebenenfalls mit mehreren Raumeinheiten in Form eines Quaders mit Kantenelementen und zumindest zwei Grundrahmen, die über insbesondere vier Steher verbunden sind; welcher Quader gegebenenfalls Streben aufweist, und einer Bodenplatte, die im wesentlichen parallel zum Grundrahmen angeordnet ist, für den Nutz- bzw. Wohnraum, besteht im wesentlichen darin, daß die Bodenplatte zumindest Ausnehmungen für den Durchtritt einer Wasserabflußleitung aufweist, die im Bereich

- 3 -

der Bodenplatte mit einem Rohrkupplungselement endigt, wobei zumindest ein weiterer Quader mit kürzeren Stehern als denjenigen des Quaders der Raumeinheit vorgesehen ist, welcher zumindest eine Wasserabflußleitung mit einem Kupplungselement im Bereich des Grundrahmens aufweist.

Eine derartige Transporteinheit erlaubt es, im Container die Wasserversorgungseinrichtungen und zwar vollkommen geschützt gegenüber Zerstörungen anzuordnen, wobei die entsprechenden Anschlüsse für die Einrichtungen im Container bereits fix vorgesehen werden können und die Anschlußkupplungen für die lokalen Entsorgungs- bzw. Versorgungsleitungen ein schnelles und dichtes Verbinden erlauben.

Ist ein weiterer Quader mit kleineren Stehern vorgesehen, als denjenigen des Quaders der Raumeinheit, welcher Be- und Entlüftungseinrichtungen trägt, so kann eine besonders hohe Vielzahl von Raumeinheiten nebeneinander angeordnet werden, da die Trennwände und Versteifungselemente, Streben, und dgl. aus dem Quader für die Raumeinheit entnommen werden können, wobei der Quader, der die Wasserentsorgungseinrichtungen trägt und der Quader, der die Be- und Entlüftungseinrichtungen trägt, eine zusätzliche Versteifung bewirken, wodurch auch bei hoher Belastung eine Durchbiegung des Grundrahmens vermieden werden kann.

Weisen zumindest zwei übereinander angeordnete weitere Quader die Abmessung eines Quaders der Raumeinheit auf, so kann ein besonders platzsparender Transport durchgeführt werden. Reichen die bzw. das Rohrkupplungselement(e) über den, insbesondere weiteren Quader zumindest teilweise hinaus, so kann bei der Montage der Quader untereinander eine sehr rasche Verbindung der Ver- und Entsorgungsleitungen durchgeführt werden.

Reichen in Transportstellung der zwei übereinander angeordneten weiteren Quader die Be- und Entlüftungeinrichtungen und/oder die/das Rohrkupplungselement(e) in
den jeweils anderen Quader, so ist dadurch sowohl in
Betriebsstellung, als auch in Transportstellung eine
optimale Raumausnutzung gegeben, wobei gleichzeitig
ein vollkommener Schutz der Einbauten beim Transport
gegeben ist.

Ist in einem weiteren Quader ein Installationsschacht
vorgesehen, so kann eine besonders einfache Raumeinteilung in Betriebsstellung der Transporteinheiten gewährleistet sein.

Besonders in ariden Gebieten kann es von Vorteil sein,
wenn der Installationsschacht eine thermische Isolierung
aufweist, womit entweder ein Einfrieren der Wasserzu-
und -ableitungen vermeidbar ist, wenn gleichzeitig im
Installationsschacht ein Wärmeträger angeordnet wird,
bzw. kann eine unerwünschte Erwärmung dadurch verhindert
werden.

Im folgenden wird die Erfindung anhand der Zeichnungen
näher erläutert.

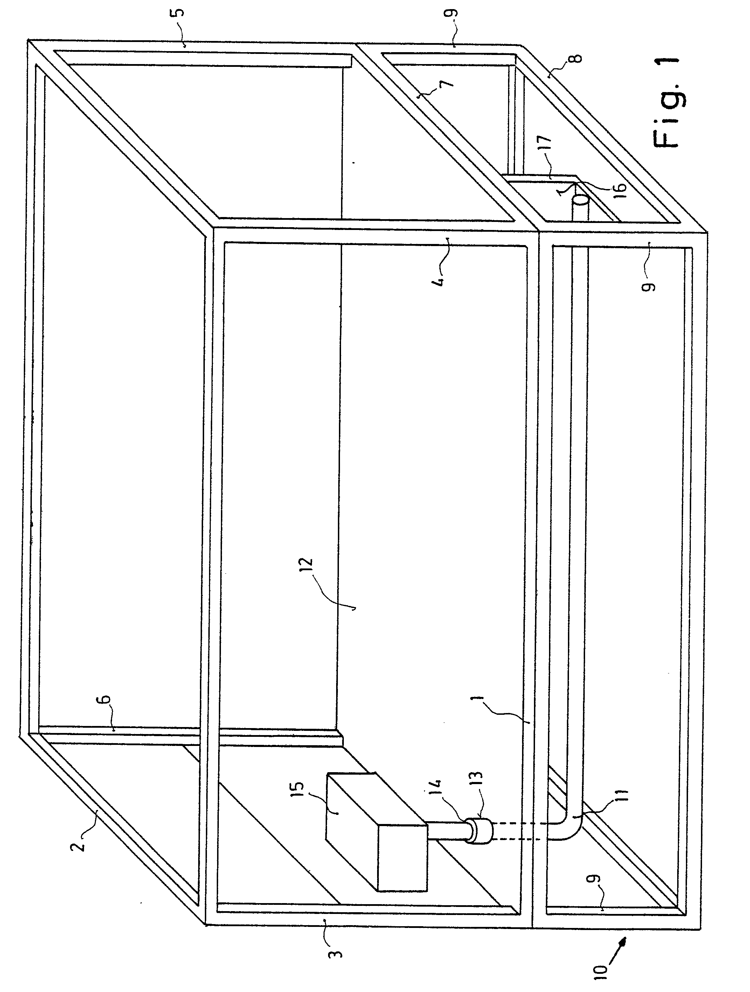

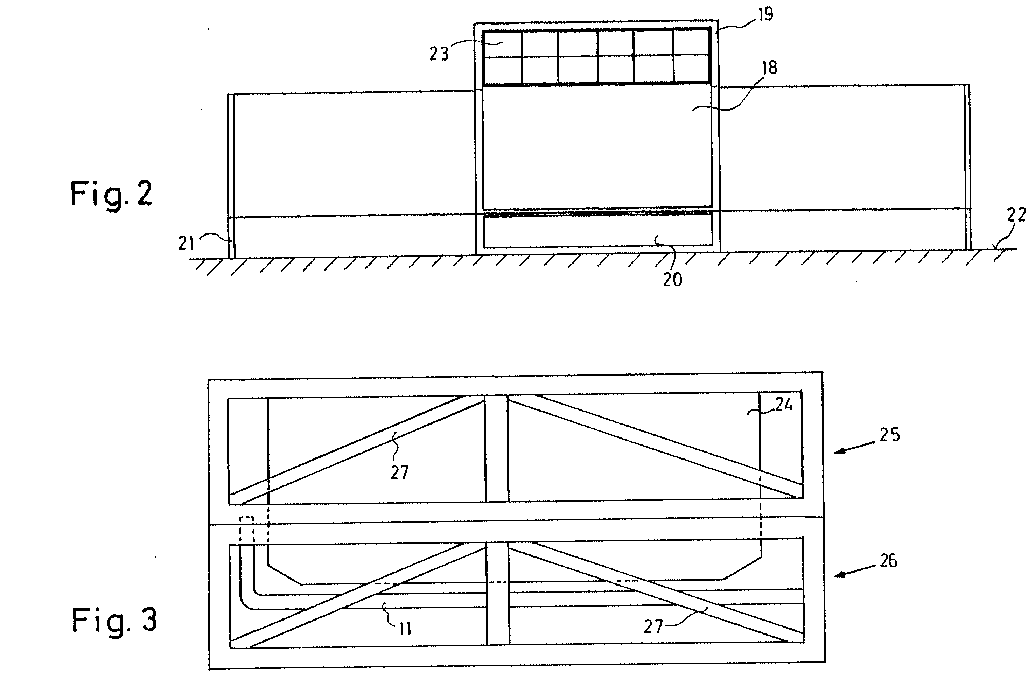

Es zeigen: Fig. 1 eine Transporteinheit mit darunter
angeordnetem weiteren Quader, Fig. 2 drei zusammengebaute Transporteinheiten, wobei die mittlere Transporteinheit einen oberen und unteren weiteren Quader aufweist und Fig. 3 zwei weitere Quader, die eine Transporteinheit bilden.

Die in Fig. 1 dargestellte Transporteinheit, weist zwei Grundrahmen 1 und 2 auf, durch welche die Grundfläche der einzelnen Wohn- bzw. Nutzraumeinheit definiert ist. Die beiden Grundrahmen sind miteinander über vier Steher 3, 4, 5 und 6 miteinander verbunden. Der untere Grundrahmen 1 trägt eine Bodenplatte 12. Weiters ist unterhalb des Grundrahmens 1 ein weiterer Quader vorgesehen, welcher ebenfalls zwei Grundrahmen 7, 8 aufweist, die wieder über Steher 9 miteinander verbunden sind. Diese Steher 9 sind kürzer als die Steher der Raumeinheit. Im weiteren Quader 10 ist eine Wasserabflußleitung 11 vorgesehen, die durch die Bodenplatte 12 mit einem Kupplungselement 13 reicht. Dieses Kupplungselement 13 ist über ein weiteres Kupplungselement 14 mit der Einrichtung 15, z.B. einem Dampfkessel, zur Leitungsführung für Dampf und Kondensat verbunden. Die Wasserabflußleitung 11 kann weiters, wie in der Stirnfläche des weiteren Quaders dargestellt, in einem eigenen Installationsschacht 16 vorgesehen sein, der eine thermische Isolierung 17 trägt.

Bei den in Fig. 2 dargestellten Transporteinheiten sind drei Transporteinheiten, durch welche Raumeinheiten gebildet sind, nebeneinander angeordnet, wobei die mittlere Transporteinheit 18 sowohl unterhalb als auch oberhalb jeweils einen weiteren Quader 19 bzw. 20 trägt. Der weitere Quader 20 weist die Höhe der Abstützungen 21 auf, auf welchen die anderen Raumeinheiten am Boden 22 abgestützt sind. Der weitere Quader 19, welcher eine Be- und Entlüftungseinrichtung beinhaltet, ist mit Fenstern 23 ausgestattet, wodurch ein noch besserer Lichteintritt gewährleistet ist. Die Seitenwandversteifungen des Quaders 18 können demontiert werden, sobald Quader 19 und 20 fest verbunden sind, da diese die Versteifung übernehmen. Dadurch werden bei nebeneinader liegenden Containern nach Entfernung der Wände und Versteifungen freie Durchtritte ermöglicht.

In Fig. 3 sind zwei gleich große weitere Quader zu einer Transporteinheit verbunden, wobei die Be- und Entlüftungseinrichtungen 24 in den unteren Quader 26 reichen, wohingegen die Abschlußleitung 11 in den oberen Quader 25 reicht. Beide weitere Quader weisen Streben 27 auf.

Die Quader können, so erforderlich, für den Transport bzw. für die Betriebsstellung Wände, Fenster, Türen od. dgl. aufweisen.

Derartige Transporteinheiten eignen sich insbesondere für Küchen, Sanitärräume und dgl., wobei ihr Einsatz, z.B. bei Klein- und Großbaustellen oder auch in Katastrophengebieten bevorzugt ist.

Patentansprüche :

1. Transporteinheit zum Aufbau von Nutz- bzw. Wohnräumen mit Wasserinstallationen und gegebenenfalls weiteren Einrichtungen, gegebenenfalls mit mehreren Raumeinheiten in Form eines Quaders mit Kantenelementen und zumindest zwei Grundrahmen (1, 2), die über insbesondere vier Steher (3,4,5,6) verbunden sind; welcher Quader gegebenenfalls Streben (27) aufweist, und einer Bodenplatte (12), die im wesentlichen parallel zum Grundrahmen (1) angeordnet ist, für den Wohn- bzw. Nutzraum, dadurch gekennzeichnet, daß die Bodenplatte (12) zumindest Ausnehmungen für den Durchtritt einer Wasserabflußleitung (11) aufweist, die im Bereich der Bodenplatte (12) mit einem Rohrkupplungselement (13) endigt, wobei zumindest ein weiterer Quader (10) mit kürzeren Stehern (9) als denjenigen des Quaders der Raumeinheit vorgesehen ist, welcher zumindest eine Wasserabflußleitung (11) mit einem Kupplungselement (13) im Bereich des Grundrahmens (1) aufweist.

2. Transporteinheit nach Anspruch 1, dadurch gekennzeichnet, daß ein weiterer Quader mit kürzeren Stehern als denjenigen des Quaders der Raumeinheit vorgesehen ist, welcher Be- und Entlüftungseinrichtungen trägt.

3. Transporteinheit nach Anspruch 1 oder 2, dadurch gekennzeichnet, daß zumindest zwei übereinander angeordnete weitere Quader die Abmessung eines Quaders der Raumeinheit aufweisen.

4. Transporteinheit nach Anspruch 1, 2 oder 3, dadurch gekennzeichnet, daß zumindest teilweise das/die Rohrkupplungselement(e) über den, insbesondere weiteren, Quader, hinausreich(t)(en).

5. Transporteinheit nach einem der Ansprüche 1 bis 4, dadurch gekennzeichnet, daß in Transportstellung der zwei übereinander angeordneten weiteren Quader die Be- und Entlüftungseinrichtung und/oder die/das Rohrkupplungselement(e) in den jeweils anderen Quader reichen.

6. Transporteinheit nach einem der Ansprüche 1 bis 5, dadurch gekennzeichnet, daß in einem weiteren Quader ein Installationsschacht vorgesehen ist.

7. Transporteinheit nach Anspruch 6, dadurch gekennzeichnet, daß der Installationsschacht (16) eine thermische Isolierung aufweist.

Fig. 1

0159976

Fig. 2

Fig. 3